# EUROPEAN PATENT APPLICATION

(11) **EP 4 459 802 A1**
(43) Date of publication of application: **06.11.2024**
(21) Application number: 22914865.5
(22) Date of filing: 28.12.2022
(51) Int. Cl.: H01R 13/02

(54) **ELECTRIC ENERGY TRANSMISSION CONNECTING MECHANISM, CHARGING SOCKET AND MOTOR VEHICLE**

(30) Priority: 30.12.2021 CN 202123414851 U
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Elkington and Fife LLP
(86) International application number: PCT/CN2022/142636
(87) International publication number: WO 2023/125613

(57) **Abstract**

The present disclosure provides an electric energy transmission connecting mechanism, a charging socket, and a motor vehicle. The electric energy transmission connecting mechanism comprises: a first flat belt and a second flat belt which are vertically stacked, a first electrical device and a second electrical device placed side by side, a first terminal connecting the first flat belt and the first electrical device, and a second terminal connecting the second flat belt and the second electrical device. The electric energy transmission connecting mechanism is simple in structure and cost-saving, and can make the adaption between the flat belts and the electrical devices more convenient.

## Description

### RELATED APPLICATION

The present disclosure claims the priority of the Chinese patent with an application number of 202123414851.5, an invention title of "electric energy transmission connecting mechanism, charging socket and motor vehicle", and filed on December 30, 2021, the entire content of which is incorporated herein by reference.

### TECHNICAL FIELD

The present disclosure relates to the field of electric energy transmission, and particularly to an electric energy transmission connecting mechanism, a charging socket and a motor vehicle.

### BACKGROUND

Currently, in the field of electric energy transmission, there are many occasions that require the conduction of large current, for example, charging cables used in an electric vehicle requires the conduction of large current to charge a battery of the electric vehicle. When large current passes through the cables, a large electromagnetic field will be generated, which causes electromagnetic interference to the use of other electrical facilities. At present, shielding mechanisms are usually added in the cables and the connecting devices to shield the electromagnetic interference generated in the cables.

In some occasions, stacked flat belts may be used as the cables for current conduction. The stacked flat belts will cancel out the generated electromagnetic fields, so that the electromagnetic interference generated by the cables and the joints can be reduced without providing a shielding mechanism, thereby achieving the purposes of reducing the cost and optimizing the cable structure. However, in the electrical devices connected to the stacked flat belts, the joints are generally placed side by side with different connection angles, and it is impossible to achieve a direct connection.

Therefore, currently there is an urgent need for an electric energy transmission connecting mechanism between a connecting cable and an electrical device, which can realize the purpose of adapting the stacked flat belts to the electrical devices placed side by side while saving the cost.

### SUMMARY

An objective of the present disclosure is to provide an electric energy transmission connecting mechanism, which is simple in structure and cost-saving, and can make the adaption between flat belts and electrical devices more convenient.

The above objective of the present disclosure can be achieved using the following technical solution: an electric energy transmission connecting mechanism, comprising a first flat belt and a second flat belt which are vertically stacked, a first electrical device and a second electrical device placed side by side, a first terminal connecting the first flat belt and the first electrical device, and a second terminal connecting the second flat belt and the second electrical device.

In an exemplary embodiment, the first terminal includes a first connection portion at least partially connected to the first flat belt and a first contact portion at least partially connected to the first electrical device; the second terminal includes a second connection portion at least partially connected to the second flat belt and a second contact portion at least partially connected to the second electrical device; the first connection portion and the second connection portion are disposed to be opposite to each other.

In an exemplary embodiment, the electric energy transmission connecting mechanism further includes a first reinforcement terminal connected to the first terminal in a vertically stacked manner, and a second reinforcement terminal connected to the second terminal in a vertically stacked manner.

In an exemplary embodiment, the first reinforcement terminal has a structure matched with the first bent portion and the first contact portion of the first terminal, and the second reinforcement terminal has a structure matched with the second bent portion and the second contact portion of the second terminal.

The present disclosure further provides a charging socket, comprising any of the electric energy transmission connecting mechanisms described above.

The present disclosure further provides a motor vehicle, comprising any of the electric energy transmission connecting mechanisms described above or the charging socket described above.

The present disclosure has the following characteristics and advantages:
By vertically stacking the first flat belt and the second flat belt in the electric energy transmission connecting mechanism, the purpose of avoiding electromagnetic interference can be achieved without adding a shielding structure. In addition, by using the first terminal and the second terminal, the connections in different directions can be made according to different connection angles between the cable and the electrical device; and by using the first reinforcement terminal and the second reinforcement terminal, the output current carrying capacity of the cable can be increased and the electrical connection can be better realized.

### BRIEF DESCRIPTION OF THE DRAWINGS

In order to more clearly explain the technical solutions in the embodiments of the present disclosure, the drawings to be used in the description of the embodiments will be briefly introduced as follows. Obviously, the drawings used in the following description only illustrate some embodiments of the present disclosure, and those of ordinary skill in the art can obtain other drawings from them without paying any creative labor.
FIG. 1 illustrates a schematic diagram of a structure of an electric energy transmission connecting mechanism in the present disclosure;
FIG. 2 illustrates a schematic diagram of a connection structure of a flat belt and a terminal in the present disclosure;
FIG. 3 illustrates a schematic diagram of a structure of a terminal in the present disclosure;
FIG. 4 illustrates a schematic diagram of an injection-molded structure of a flat belt and a terminal in the present disclosure;
FIG. 5 illustrates a schematic diagram of a structure of a flat belt in the present disclosure;
FIG. 6 illustrates a schematic diagram of an injection-molded structure of a flat belt and a terminal in the present disclosure; and
FIG. 7 illustrates a schematic diagram of a connection structure of elastic sheets of an electric energy transmission connecting mechanism in the present disclosure.

### DETAILED DESCRIPTION OF THE PREFERRED EMBODIMENTS

The technical solutions in the embodiments of the present disclosure will be clearly and completely described below with reference to the drawings for the embodiments of the present disclosure. Obviously, those described are merely a part, rather than all, of the embodiments of the present disclosure. Based on the embodiments of the present disclosure, any other embodiment obtained by those of ordinary skill in the art without paying any creative labor should fall within the protection scope of the present disclosure.

Those described below are only a few embodiments of the present disclosure, and persons skilled in the art can make various modifications or variations to the embodiments of the present disclosure according to the contents disclosed in the application document without departing from the spirit and scope of the present disclosure. It should be understood that an orientation or positional relationship indicated by the term "length", "width", "upper", "lower", "front", "back", "left", "right", "vertical", "horizontal", "top", "bottom", "inner", "outer" or the like is based on that illustrated in the drawings, and is only for the convenience of describing the present disclosure and simplifying the description, rather than indicating or implying that a referred device or element must have a specific orientation, or must be constructed and operated in a specific orientation, and the above term cannot be understood as a limitation to the present disclosure.

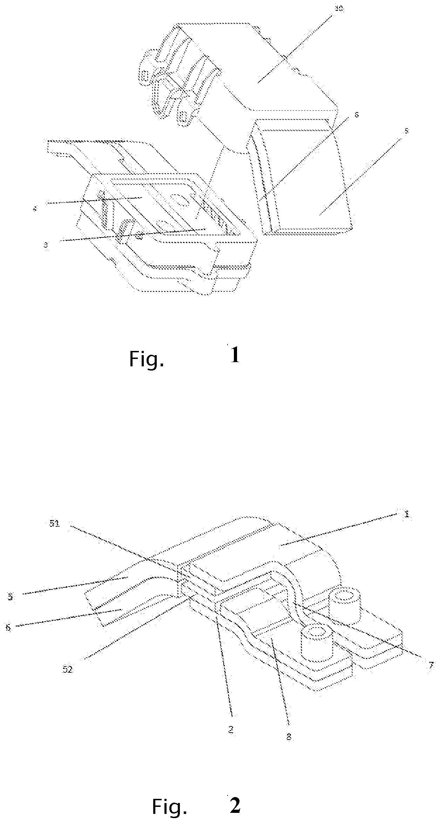

In an embodiment, as illustrated in FIGS. 1 to 4, the present disclosure provides an electric energy transmission connecting mechanism, which includes a first flat belt 5 and a second flat belt 6 which are vertically stacked, a first electrical device 3 and a second electrical device 4 placed side by side, a first terminal 1 connecting the first flat belt 5 and the first electrical device 3, and a second terminal 2 connecting the second flat belt 6 and the second electrical device 4. Generally, the first electrical device 3 and the second electrical device 4 are disposed side by side, and the first flat belt 5 and the second flat belt 6 are vertically stacked. Therefore, it is necessary to use the first terminal 1 and the second terminal 2 to carry out the transfer, so that the electric energy transmission connecting mechanism can achieve an electrical connection. The first flat belt 5 and the second flat belt 6 are stacked up and down, and an appropriate distance is set, which can effectively reduce the electromagnetic interference caused to other components after the electric energy transmission system is electrified. The electric energy transmission connecting mechanism achieves excellent electrical conductivity, light weight, low cost, simple structure and convenient assembly, and can avoid electromagnetic interference in the high current charging process.

When the first flat belt 5 and the second flat belt 6 are vertically stacked, the largest area has the strongest magnetic field. By means of stacking, the magnetic fields of the positive and negative charging flat belts can be cancelled (since the magnitudes of the current in the two electric energy transmission rails are the same and the directions A of the current are opposite, the induced magnetic fields have the same intensity and opposite directions), so as to eliminate the electromagnetic interference to other electrical devices when the electric energy transmission connecting mechanism is electrified.

Exemplarily, the first flat belt 5 and the second flat belt 6 are parallel to each other in a width direction. A vertical distance between the first flat belt 5 and the second flat belt 6 is H, exemplarily less than or equal to 7 cm, and specifically may be 7 cm, 6 cm, 5 cm, 1 cm, 0.5 cm, 0.1 cm, 0.05 cm, or the like.

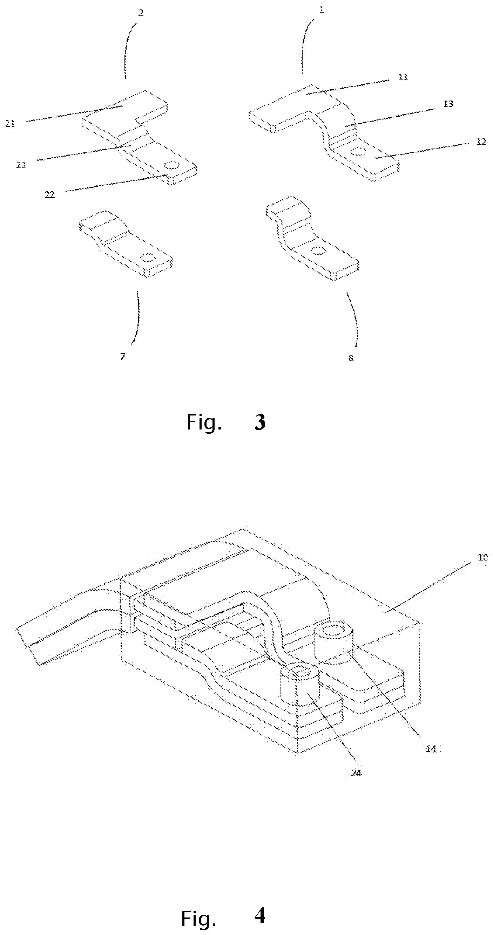

In an embodiment, as illustrated in FIGS. 2 and 3, in a specific connection process, the first terminal 1 includes a first connection portion 11 at least partially connected to the first flat belt 5 and a first contact portion 12 at least partially connected to the first electrical device 3; the second terminal 2 includes a second connection portion 21 at least partially connected to the second flat belt 6 and a second contact portion 22 at least partially connected to the second electrical device 4; the first connection portion 11 and the second connection portion 21 are disposed to be opposite to each other. The first terminal 1 has the first connection portion 11 at least partially electrically connected to the first flat belt 5 and the first contact portion 12 electrically connected to the first electrical device 3, and the second terminal 2 has the second connection portion 21 at least partially electrically connected to the second flat belt 6 and the second contact portion 22 electrically connected to the second electrical device 4.

In an embodiment, as illustrated in FIG. 3, the first connection portion 11 and the second connection portion 21 are symmetrical in shape.

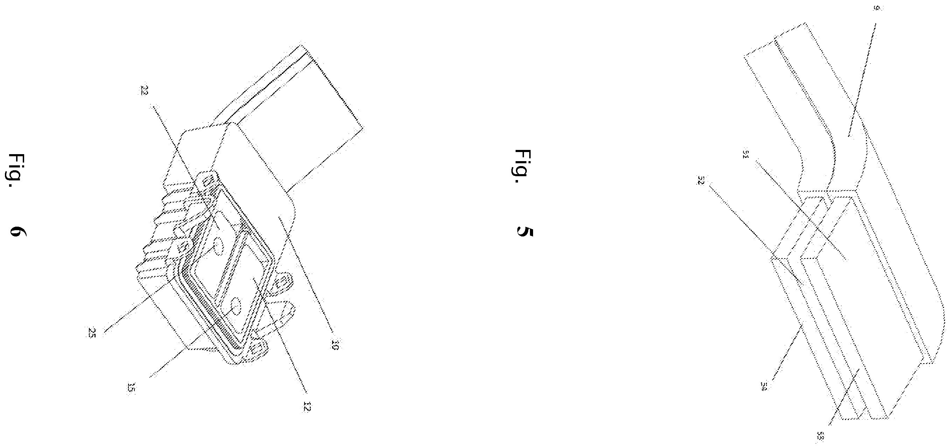

In an embodiment, as illustrated in FIGS. 2 and 5, the first flat belt 5 and the second flat belt 6 are wrapped with an insulation layer 9, one end of the first flat belt 5 is provided with a first flat belt connection portion 51 which is at least partially electrically connected to at least part of the first connection portion 11, and one end of the second flat belt 6 is provided with a second flat belt connection portion 52 which is at least partially electrically connected to at least part of the second connection portion 21.

Regarding the connection mode, the connection mode between the first flat belt connection portion 51 of the first flat belt 5 and the first connection portion 11, and the connection mode between the second flat belt connection portion 52 of the second flat belt 6 and the second connection portion 21 may respectively adopt one or more of resistance welding, friction welding, ultrasonic welding, arc welding, laser welding, electron beam welding, pressure welding, diffusion welding, magnetic induction welding and crimping.

The resistance welding refers to a method of welding by causing strong current to pass through a contact point between an electrode and a workpiece and generating heat by a contact resistance.

The friction welding refers to a method of welding by taking heat generated by the friction of a contact surface of a workpiece as a heat source to plastically deform the workpiece under pressure.

The ultrasonic welding is to transmit high-frequency vibration waves to the surfaces of two objects to be welded, so that under pressure, the surfaces of the two objects rub against each other to fuse molecular layers.

The arc welding is to convert electric energy into heat energy and mechanical energy required for welding by using electric arc as a heat source and the physical phenomenon of air discharge, so as to connect metals. The arc welding mainly includes shielded metal arc welding, submerged arc welding and gas shielded welding, etc.

The laser welding is an efficient and precise welding method using a laser beam of a high energy density as a heat source.

The electron beam welding is to use accelerated and focused electron beams to bombard welding surfaces placed in vacuum or non-vacuum, so that the workpieces to be welded can be melted to realize welding.

The pressure welding is a method of applying a pressure to the workpieces to be welded to make joint surfaces closely contact and produce certain plastic deformation to complete the welding.

The diffusion welding refers to a solid-state welding method that pressurizes the workpieces at a high temperature without visible deformation and relative movement.

The magnetic induction welding means that two workpieces to be welded are subjected to instantaneous high-speed collision under the action of a strong pulse magnetic field, and the atoms of two materials meet within an inter-atomic distance under the action of highpressure waves on the surfaces of the materials, thereby forming a stable metallurgical bonding on the interface. The magnetic induction welding is a kind of solid-state cold welding, and can weld together the conductive metals having similar or dissimilar properties.

The crimping is a production process in which a connecting end and a connecting surface are assembled and then stamped into a whole using a crimping machine. The crimping has the advantage of mass production, and by adopting an automatic crimping machine, products with a stable quality can be rapidly manufactured in large quantities.

Based on the above connection modes, an appropriate connection mode or combination thereof can be selected according to the actual use environment, thereby realizing an effective electrical connection.

In an embodiment, as illustrated in FIG. 5, the first flat belt connection portion 51 includes a first upper plane and a first lower plane, the second flat belt connection portion 52 includes a second upper plane and a second lower plane, the first lower plane is adjacent to the second upper plane, the first upper plane is at least partially electrically connected to at least part of the first connection portion 11, and the second lower plane is at least partially electrically connected to at least part of the second connection portion 21. Since the first flat belt 5 and the second flat belt 6 are vertically stacked, the first upper plane is connected to the first connection portion 11, and the second lower plane is connected to the second connection portion 21, so that the connections are more convenient and quicker.

In an embodiment, as illustrated in FIG. 3, at least one first bent portion 13 is disposed between the first connection portion 11 and the first contact portion 12 which are located in different planes, at least one second bent portion 23 is disposed between the second connection portion 21 and the second contact portion 22 which are located in different planes, an included angle between the planes where the first connection portion 11 and the first contact portion 12 are located is 0° to 180°, and an included angle between the planes where the second connection portion 21 and the second contact portion 22 are located is 0° to 180°.

By disposing the first bent portion 13 and the second bent portion 23, the first contact portion 12 and the second contact portion 22 can finally be ensured to be in the same plane through different bending angles, and after the first flat belt 5 and the second flat belt 6 which are vertically stacked are connected to the first electrical device 3 and the second electrical device 4, the first electrical device 3 and the second electrical device 4 can be ensured to be in the same plane to realize the function of transition connection. In an embodiment, the included angle between the planes where the first connection portion 11 and the first contact portion 12 are located is 0° to 180°. The bending angle is between 0° and 180°, so as to meet the requirements of the first electrical device 3 and the electrical plane of the first electrical device 3 in different directions. In other embodiments, due to the space limitation or other requirements of the line outlet direction, it is allowable to change the included angle between the planes where the first connection portion 11 and the first contact portion 12 are located, and between the planes where the second connection portion 21 and the second contact portion 22 are located.

In an embodiment, an included angle between the inner sides of the first connection portion 11 and the first contact portion 12 connected to the first bent portion 13 projected on the plane of the first connection portion 11, and an included angle between the inner sides of the second connection portion 21 and the second contact portion 22 connected to the second bent portion 23 projected on the plane of the second connection portion 21, are complementary angles to each other.

In the combination process of the electric energy transmission mechanism, when the first electrical device 3 and the second electrical device 4 are misaligned with the first flat belt 5 and the second flat belt 6 which are vertically stacked, an included angle between the inner sides of the first connection portion 11 and the first contact portion 12 of the first terminal 1 may be an obtuse angle, such as 120°, and then an included angle between the inner sides of the second connection portion 21 and the second contact portion 22 of the second terminal 2 may be 60°, i.e., the included angles on the projection plane are complementary angles to each other. As illustrated in FIG. 3, each included angle is 90°.

In an embodiment, as illustrated in FIGS. 2 to 4, there further included a first reinforcement terminal 7 connected to the first terminal 1 in a vertically stacked manner, and a second reinforcement terminal 8 connected to the second terminal 2 in a vertically stacked manner.

When the first reinforcement terminal 7 is connected to the first terminal 1 in a vertically stacked manner, and the second reinforcement terminal 8 is connected to the second terminal 2 in a vertically stacked manner, a connection may be made at first, and the connection mode includes one or more of resistance welding, friction welding, ultrasonic welding, arc welding, laser welding, electron beam welding, pressure welding, diffusion welding, magnetic induction welding and crimping. The above terminals may also be stacked without connection, and then screwed by bolts.

In an embodiment, as illustrated in FIG. 3, the first reinforcement terminal 7 has a structure matched with the first bent portion 13 and the first contact portion 12 of the first terminal 1, and the second reinforcement terminal 8 has a structure matched with the second bent portion 23 and the second contact portion 22 of the second terminal 2.

The first reinforcement terminal 7 also has a bent area and a contact area matched with the first terminal 1, and the second reinforcement terminal 8 also has a bent area and a contact area matched with the second terminal 2, so that good electrical connection can be ensured.

In an embodiment, as illustrated in FIG. 5, the first flat belt connection portion 51 includes a first end surface 53, and one end of the first reinforcement terminal 7 is abutted against the first end surface 53; and the second flat belt connection portion 52 includes a second end surface 54, and one end of the second reinforcement terminal 8 is abutted against the second end surface.

As illustrated in FIG. 2, the first reinforcement terminal 7 is connected to the first terminal 1 while abutting against the first flat belt 5, and the second reinforcement terminal 8 is connected to the second terminal 2 while abutting against the second flat belt 6, so as to ensure a better electric energy transmission.

The materials of the first terminal 1 and the second terminal 2 contain one or more of nickel, cadmium, zirconium, chromium, cobalt, manganese, aluminum, tin, titanium, zinc, copper, silver, gold, phosphorus, tellurium, beryllium and lead.

The materials of the first switching terminal and the second switching terminal contain one or more of nickel, cadmium, zirconium, chromium, cobalt, manganese, aluminum, tin, titanium, zinc, copper, silver, gold, phosphorus, tellurium, beryllium and lead.

In an embodiment, the first terminal 1 is formed by stamping, cutting, bending or machining a plate, and the second terminal 2 is formed by stamping, cutting, bending or machining a plate.

The first terminal 1, the second terminal 2, the first reinforcement terminal 7 and the second reinforcement terminal 8 are each formed by stamping, cutting, bending or machining a plate. The use of plate processing for molding is a simple and mature process in the metal processing technology at present, and the plate is also one of the materials easily available. If the shape is not complicated, the scrap produced in the plate processing technology is much less than that produced in the processing technologies such as turning, milling, etc., so the plate processing is one of the production technologies with high material utilization rates. The first terminal 1, the second terminal 2, the first reinforcement terminal 7 and the second reinforcement terminal 8 can be produced quickly in large quantities by using the mature plate stamping technology and stamping die. In addition, advanced processing technologies such as laser cutting and water cutting may be used to cut the plate and then the terminals may be formed by a bending technology, or the plate is processed by machining, which can also reduce the production cost and improve the production efficiency.

In an embodiment, as illustrated in FIGS. 1 and 4, there further included a first bolt 14 and a second bolt 24, in which the first contact portion 12 is provided with a first through-hole 15, and the first electrical device 3 is provided with a first threaded hole with which the first bolt 14 is screwed through the first through-hole 15; and the second contact portion 22 is provided with a second through-hole 25, and the second electrical device 4 is provided with a second threaded hole with which the second bolt 24 is screwed through the second through-hole 25.

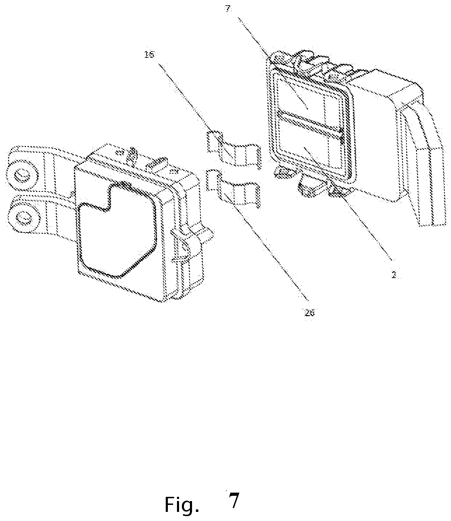

In an embodiment, as illustrated in FIG. 7, between the first electrical device 3 and the first contact portion 12, the first contact portion 12 is further provided with a first contact elastic sheet 16 which is at least partially electrically connected to the first electrical device 3; and between the second electrical device 4 and the second contact portion 22, the second contact portion 22 is further provided with a second contact elastic sheet 26 which is at least partially electrically connected to the second electrical device 4.

When the first contact portion 12 is provided with the first contact elastic sheet 16, and the second contact portion 22 is provided with the second contact elastic sheet 26, the connection mode between the first contact elastic sheet 16 and the first contact portion 12, and the connection mode between the second contact elastic sheet 26 and the second contact portion 22 may be one or more of resistance welding, friction welding, ultrasonic welding, arc welding, laser welding, electron beam welding, pressure welding, diffusion welding, magnetic induction welding and crimping. After connection, the first contact elastic sheet 16 and second contact elastic sheet 26 are electrically connected to the first electrical device 3 and the second electrical device 4, respectively.

In an embodiment, as illustrated in FIGS. 4 and 6, the first flat belt connection portion 51, the second flat belt connection portion 52, the first terminal 1, the second terminal 2 and at least part of the insulation layer 9 are surrounded by an integrally molded plastic housing 10. This design can achieve good insulation performance.

In an embodiment, as illustrated in FIG. 6, at least part of the first contact portion 12 and at least part of the second contact portion 22 are exposed to the plastic housing 10.

The first contact portion 12 and the second contact portion 22 are exposed in the plastic housing 10, so that the electrical connection with the first electrical device 3 and the second electrical device 4 can be ensured.

The integral injection-molding processing is simple, during which the first flat belt connection portion 51 and the first terminal 1 can be integrally injection-molded, the second flat belt 6 and the second terminal 2 can be integrally injection-molded, while the insulation layers 9 of part of the flat belts can be injection-molded, so that the insulation between two flat belt power supply lines can be achieved, and the connected devices can be fixed and sealed.

In an embodiment, the embodiment including the first reinforcement terminal 7 and the second reinforcement terminal 8 further includes a first bolt 14 and a second bolt 24, in which the first contact portion 12 where the first terminal 1 and the first reinforcement terminal 7 are stacked is provided with a first through-hole 15, and the first electrical device 3 is provided with a first threaded hole with which the first bolt 14 is screwed through the first through-hole 15; and the second contact portion 22 where the second terminal 2 and the second reinforcement terminal 8 are stacked is provided with a second through-hole 25, and the second electrical device 4 is provided with a second threaded hole with which the second bolt 24 is screwed through the second through-hole 25.

In an embodiment, as illustrated in FIG. 7, between the first electrical device 3 and the first reinforcement terminal 7 or the first contact portion 12, the first reinforcement terminal 7 or the first contact portion 12 is further provided with a first contact elastic sheet 16 which is at least partially electrically connected to the first electrical device 3; and between the second electrical device 4 and the second terminal 2 or the second contact portion 22, the second terminal 2 or the second contact portion 22 is further provided with a second contact elastic sheet 26 which is at least partially electrically connected to the second electrical device 4.

When the lower plane of the first flat belt 5 is electrically connected to the first connection portion 11, the first reinforcement terminal 7 is disposed on an upper part of the first flat belt 5 and abuts against a first end surface 53 of the first flat belt 5, and at this time, the first contact portion 12 may be provided with the first contact elastic sheet 16. When the upper plane of the first flat belt 5 is connected to the first connection portion 11, the first reinforcement terminal 7 is disposed on a lower part of the first flat belt 5 and abuts against the first end surface 53 of the first flat belt 5, and at this time, the first reinforcement terminal 7 may be provided with the first contact elastic sheet 16. Similarly, the second terminal 2 and the second contact portion 22 are provided with the second contact elastic sheet 26, so as to be electrically connected to the first electrical device 3 and the second electrical device 4.

In an embodiment, the first flat belt connection portion 51, the second flat belt connection portion 52, the first reinforcement terminal 7, the second terminal 2 and at least part of the insulation layer 9 are surrounded by an integrally molded plastic housing 10.

In an embodiment, at least part of the first reinforcement terminal 7 and at least part of the second contact portion 22 are exposed to the plastic housing 10.

According to the above content, the first reinforcement terminal 7 and at least part of the second contact portion 22 are exposed and electrically connected to the first electrical device 3 and the second electrical device 4, or the first terminal 1 and at least part of the second reinforcement terminal 8 are electrically connected to the first electrical device 3 and the second electrical device 4.

In an embodiment, the present disclosure further provides a charging socket, which includes the electric energy transmission connecting mechanism as described in the above embodiments. By employing the charging socket, different adaption directions can be designed according to the mounting environment of the charging socket, thereby saving the mounting space.

In an embodiment, the present disclosure further provides a motor vehicle, which includes the electric energy transmission connecting mechanism or the charging socket as described in the above embodiments. This design can save the mounting space and provide convenience for the mounting and layout of other electrical appliances.

In addition, the terms "first", "second", "third" and "fourth" are only used for descriptive purposes, and cannot be understood as indicating or implying relative importance or implicitly indicating the number of the technical features referred to.

In the present disclosure, unless otherwise expressly specified and limited, a term such as "mount", "connect", "fix" or the like should be broadly understood, and for example, it may be a fixed connection, a detachable connection, an integration, a mechanical connection, an electrical connection, a direct connection, an indirect connection through an intermediate medium, or a communication between the interiors of two elements, or an interactive relationship between two elements. For persons skilled in the art, the specific meanings of the above terms in the present disclosure can be understood according to specific situations.

## Claims

1. An electric energy transmission connecting mechanism, wherein comprising a first flat belt and a second flat belt which are vertically stacked, a first electrical device and a second electrical device placed side by side, a first terminal connecting the first flat belt and the first electrical device, and a second terminal connecting the second flat belt and the second electrical device.

2. The electric energy transmission connecting mechanism according to claim 1, wherein the first terminal comprises a first connection portion at least partially connected to the first flat belt and a first contact portion at least partially connected to the first electrical device; the second terminal comprises a second connection portion at least partially connected to the second flat belt and a second contact portion at least partially connected to the second electrical device; the first connection portion and the second connection portion are disposed to be opposite to each other.

3. The electric energy transmission connecting mechanism according to claim 2, wherein the first connection portion and the second connection portion are symmetrical in shape.

4. The electric energy transmission connecting mechanism according to claim 2, wherein the first flat belt and the second flat belt are wrapped with an insulation layer, one end of the first flat belt is provided with a first flat belt connection portion which is at least partially electrically connected to at least part of the first connection portion, and one end of the second flat belt is provided with a second flat belt connection portion which is at least partially electrically connected to at least part of the second connection portion.

5. The electric energy transmission connecting mechanism according to claim 4, wherein the first flat belt connection portion comprises a first upper plane and a first lower plane, the second flat belt connection portion comprises a second upper plane and a second lower plane, the first lower plane is adjacent to the second upper plane, the first upper plane is at least partially electrically connected to at least part of the first connection portion, and the second lower plane is at least partially electrically connected to at least part of the second connection portion.

6. The electric energy transmission connecting mechanism according to claim 2, wherein at least one first bent portion is disposed between the first connection portion and the first contact portion which are located in different planes, at least one second bent portion is disposed between the second connection portion and the second contact portion which are located in different planes, an included angle between the planes where the first connection portion and the first contact portion are located is 0° to 180°, and an included angle between the planes where the second connection portion and the second contact portion are located is 0° to 180°.

7. The electric energy transmission connecting mechanism according to claim 6, wherein an included angle between the inner sides of the first connection portion and the first contact portion connected to the first bent portion projected on the plane of the first connection portion, and an included angle between the inner sides of the second connection portion and the second contact portion connected to the second bent portion projected on the plane of the second connection portion, are complementary angles to each other.

8. The electric energy transmission connecting mechanism according to claim 2, further comprising a first reinforcement terminal connected to the first terminal in a vertically stacked manner, and a second reinforcement terminal connected to the second terminal in a vertically stacked manner.

9. The electric energy transmission connecting mechanism according to claim 6, further comprising a first reinforcement terminal connected to the first terminal in a vertically stacked manner, and a second reinforcement terminal connected to the second terminal in a vertically stacked manner;
the first reinforcement terminal has a structure matched with the first bent portion and the first contact portion of the first terminal, and the second reinforcement terminal has a structure matched with the second bent portion and the second contact portion of the second terminal.

10. The electric energy transmission connecting mechanism according to claim 9, wherein the first flat belt and the second flat belt are wrapped with an insulation layer, one end of the first flat belt is provided with a first flat belt connection portion which is at least partially electrically connected to at least part of the first connection portion, and one end of the second flat belt is provided with a second flat belt connection portion which is at least partially electrically connected to at least part of the second connection portion;
the first flat belt connection portion comprises a first end surface, and one end of the first reinforcement terminal is abutted against the first end surface ; and the second flat belt connection portion comprises a second end surface, and one end of the second reinforcement terminal is abutted against the second end surface.

11. The electric energy transmission connecting mechanism according to claim 1 or 8, wherein the first terminal is formed by stamping, cutting, bending or machining a plate, and the second terminal is formed by stamping, cutting, bending or machining a plate.

12. The electric energy transmission connecting mechanism according to claim 2, further comprising a first bolt and a second bolt, wherein the first contact portion is provided with a first through-hole, and the first electrical device is provided with a first threaded hole with which the first bolt is screwed through the first through-hole; and the second contact portion is provided with a second through-hole, and the second electrical device is provided with a second threaded hole with which the second bolt is screwed through the second through-hole.

13. The electric energy transmission connecting mechanism according to claim 2, wherein between the first electrical device and the first contact portion, the first contact portion is further provided with a first contact elastic sheet which is at least partially electrically connected to the first electrical device; and between the second electrical device and the second contact portion, the second contact portion is further provided with a second contact elastic sheet which is at least partially electrically connected to the second electrical device.

14. The electric energy transmission connecting mechanism according to claim 4, wherein the first flat belt connection portion, the second flat belt connection portion, the first reinforcement terminal, the second terminal and at least part of the insulation layer are surrounded by an integrally molded plastic housing.

15. The electric energy transmission connecting mechanism according to claim 14, wherein at least part of the first contact portion and at least part of the second contact portion are exposed to the plastic housing.

16. The electric energy transmission connecting mechanism according to claim 8, further comprising a first bolt and a second bolt, wherein the first contact portion where the first terminal and the first reinforcement terminal are stacked is provided with a first through-hole, and the first electrical device is provided with a first threaded hole with which the first bolt is screwed through the first through-hole; and the second contact portion where the second terminal and the second reinforcement terminal are stacked is provided with a second through-hole, and the second electrical device is provided with a second threaded hole with which the second bolt is screwed through the second through-hole.

17. The electric energy transmission connecting mechanism according to claim 8, wherein between the first electrical device and the first reinforcement terminal or the first contact portion, the first reinforcement terminal or the first contact portion is further provided with a first contact elastic sheet which is at least partially electrically connected to the first electrical device; and between the second electrical device and the first terminal or the second contact portion, the second terminal or the second contact portion is further provided with a second contact elastic sheet which is at least partially electrically connected to the second electrical device.

18. The electric energy transmission connecting mechanism according to claim 10, wherein the first flat belt connection portion, the second flat belt connection portion, the first reinforcement terminal, the second terminal and at least part of the insulation layer are surrounded by an integrally molded plastic housing.

19. The electric energy transmission connecting mechanism according to claim 18, wherein at least part of the first contact portion and at least part of the second contact portion are exposed to the plastic housing.

20. A charging socket, comprising the electric energy transmission connecting mechanism according to any of claims 1 to 19.

21. A motor vehicle, comprising the electric energy transmission connecting mechanism according to any of claims 1 to 19 or the charging socket according to claim 20.
